# EUROPEAN PATENT APPLICATION

(11) **EP 4 316 759 A1**
(43) Date of publication of application: **07.02.2024**
(21) Application number: 22807048.8
(22) Date of filing: 14.02.2022
(51) Int. Cl.: B26D 1/46, B26D 7/18, C08J 5/04

(54) **COMPOSITE MATERIAL CUTTING DEVICE AND COMPOSITE MATERIAL CUTTING METHOD**

(30) Priority: 13.05.2021 JP 2021081628
(71) Applicant: Mitsubishi Heavy Industries, Ltd., Tokyo 100-8332 (JP)
(72) Inventor: HIRATA, Takehiko, Tokyo 100-8332 (JP); KANEMASU, Masayuki, Tokyo 100-8332 (JP); INOUE, Tomoaki, Tokyo 100-8332 (JP); YUGE, Atsushi, Tokyo 100-8332 (JP); NISHIGAKI, Makoto, Tokyo 100-8332 (JP); YOSHIYAMA, Ryuji, Tokyo 100-8332 (JP); MATSUMOTO, Shinji, Tokyo 100-8332 (JP)
(74) Representative: Studio Torta S.p.A.
(86) International application number: PCT/JP2022/005642
(87) International publication number: WO 2022/239341

(57) **Abstract**

Provided is a composite material cutting apparatus (100) including: a support part (10) for supporting a tip (201) in a longitudinal direction (LD) of a long composite material (200) made of a resin material including a fiber base material at an upper part in the vertical direction (VD) and cause a base end (202) in the longitudinal direction (LD) of the composite material (200) to remain floating at a lower part in the vertical direction (VD); and a cutting part (20) configured to cut the composite material (200) at a cutting position (CP) between the tip (201) and the base end (202) of the composite material (200) supported by the support part (10).

## Description

### [Technical Field]

The present disclosure relates to a composite material cutting apparatus and a composite material cutting method.

### [Background Art]

Conventionally, technologies to integrally mold the framework structure of a main wing of an aircraft by using a fiber reinforced resin composite material are known (for example, see Patent Literature 1). Main wings of an aircraft are attached to a fuselage together with other components. Further, when an aircraft is dismantled, main wings are removed from the fuselage and transported to a dismantling site. The main wings transported to the dismantling site are cut or disassembled into a predetermined size by an operator and crushed by a crusher.

### [Citation List]

### [Patent Literature]

[PTL 1]
Japanese Patent Application Laid-Open No. 2001-48097

### [Summary of Invention]

### [Technical Problem]

However, transportation of a long composite material such as a main wing of an aircraft to a dismantling site will requires a large effort and also increase the cost required for the transportation.

The present disclosure has been made in view of such circumstances and intends to provide a composite material cutting apparatus and a composite material cutting method that can reduce the cost in dismantling a long composite material.

### [Solution to Problem]

The composite material cutting apparatus according to the present disclosure is provided with a support part for supporting a first end part in the longitudinal direction of a long composite material made of a resin material including a fiber base material at an upper part in the vertical direction, and for making the second end part in the longitudinal direction of the composite material to remain floating at a lower part in the vertical direction. The cutting part is configured to cut the composite material at a cutting position between the first and the second end parts of the composite material supported by the support part.

A composite material cutting method according to the present disclosure includes: a supporting step of supporting a first end part in a longitudinal direction of a long composite material made of a resin material including a fiber base material at an upper part in the vertical direction and causing a second end part in the longitudinal direction of the composite material to remain floating at a lower part in the vertical direction; and a cutting step of cutting the composite material at a cutting position between the first end part and the second end part of the composite material supported by the support part.

### [Advantageous Effects of Invention]

According to the present disclosure, a composite material cutting apparatus and a composite material cutting method that can reduce the cost in dismantling a long composite material can be provided.

### [Brief Description of Drawings]

[Fig. 1]

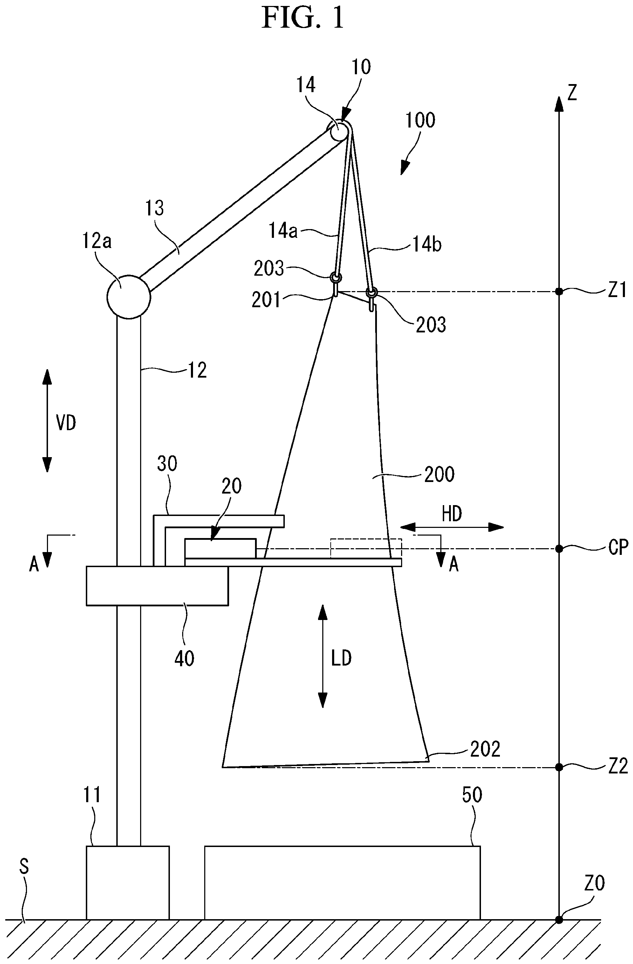

   Fig. 1 is a front view illustrating a composite material cutting apparatus according to a first embodiment of the present disclosure.
[Fig. 2]

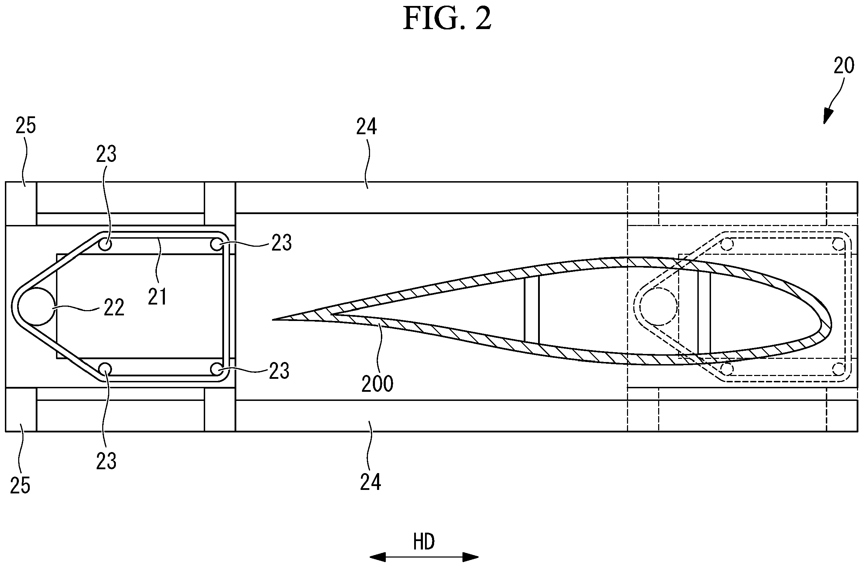

   Fig. 2 is a sectional view viewed along an arrow A-A of the composite material cutting apparatus illustrated in Fig. 1.
[Fig. 3]

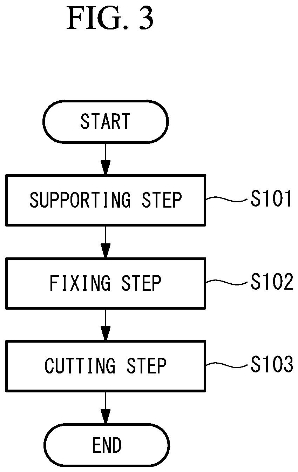

   Fig. 3 is a flowchart illustrating a composite material cutting method according to the first embodiment of the present disclosure.
[Fig. 4]

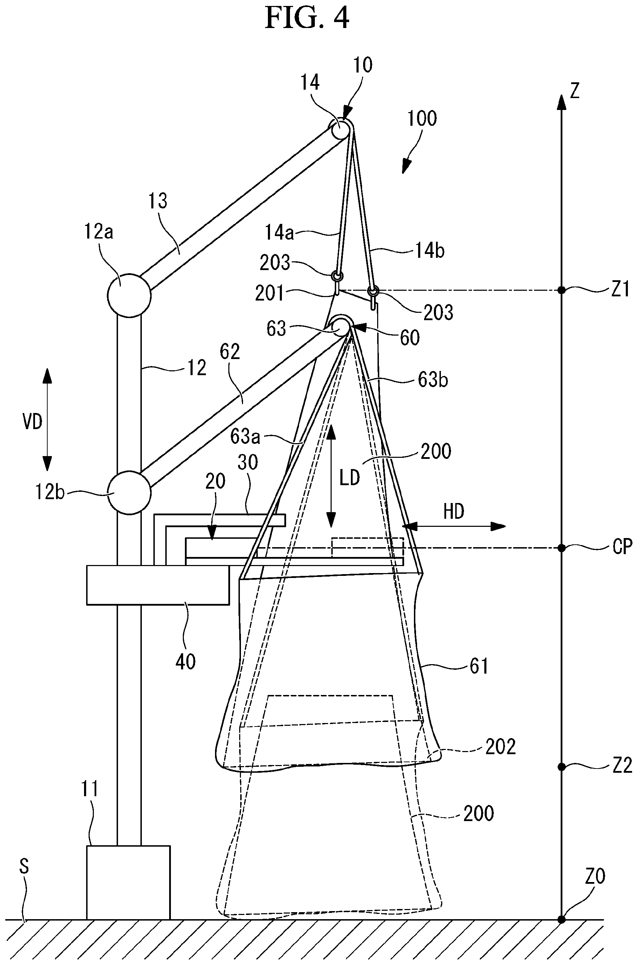

   Fig. 4 is a front view illustrating a first modified example for the composite material cutting apparatus illustrated in Fig. 1.
[Fig. 5]

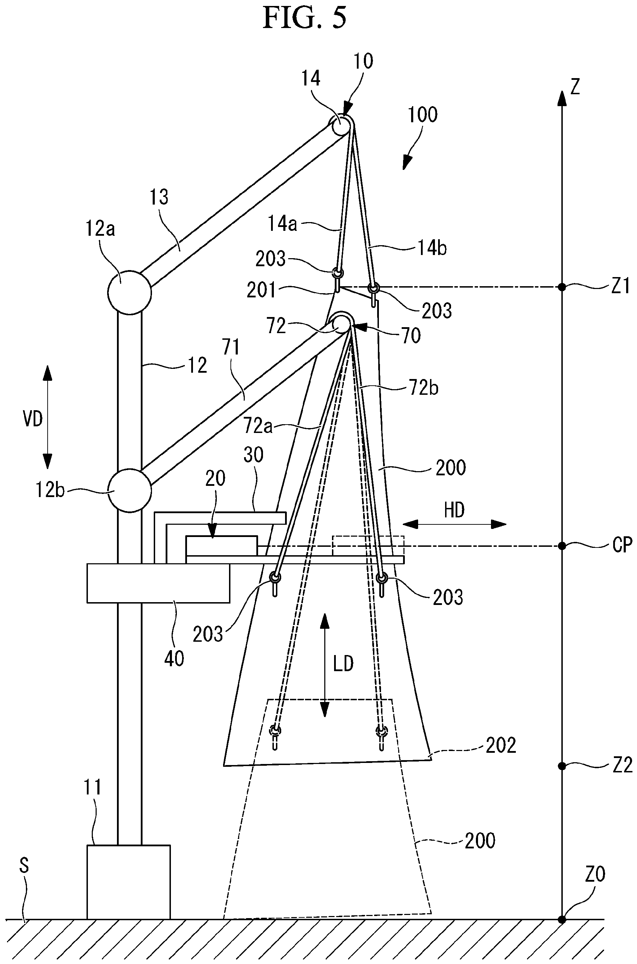

   Fig. 5 is a front view illustrating a second modified example for the composite material cutting apparatus illustrated in Fig. 1.
[Fig. 6]

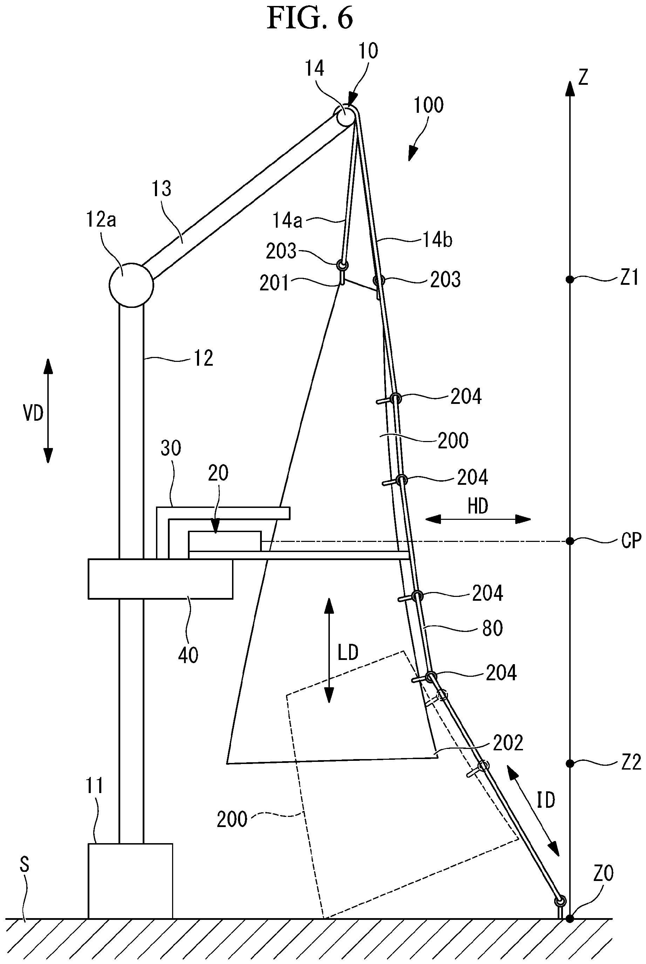

   Fig. 6 is a front view illustrating a third modified example for the composite material cutting apparatus illustrated in Fig. 1.
[Fig. 7]

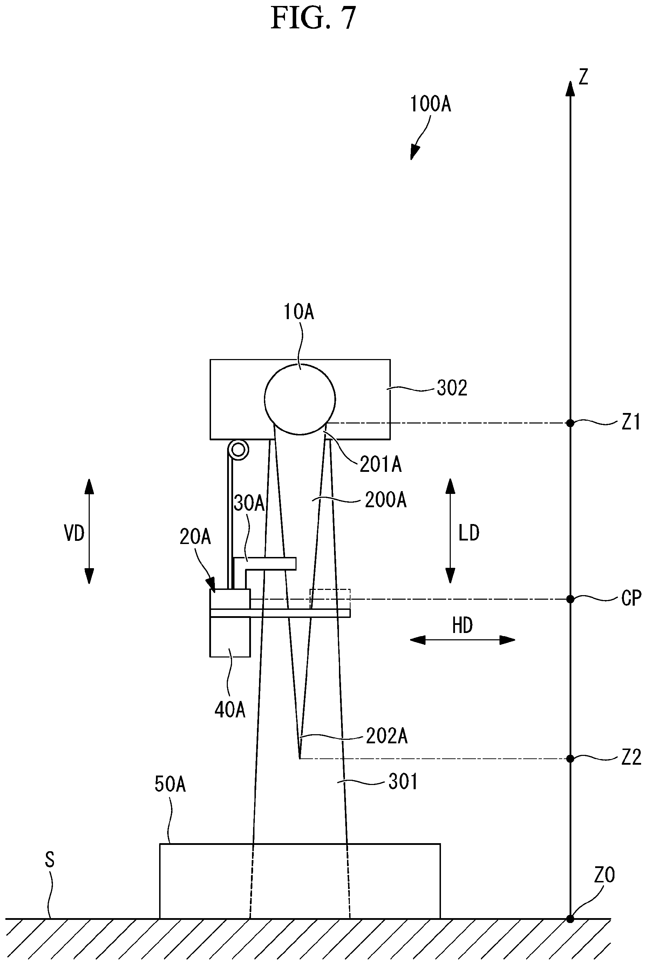

   Fig. 7 is a front view illustrating a composite material cutting apparatus according to a second embodiment of the present disclosure.
[Fig. 8]

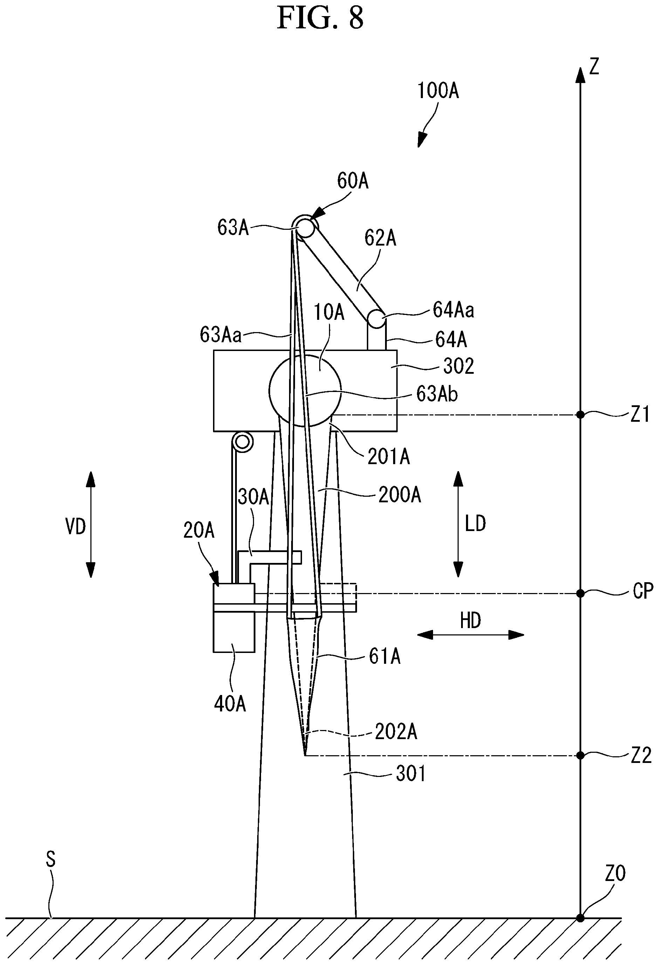

   Fig. 8 is a front view illustrating a first modified example for the composite material cutting apparatus illustrated in Fig. 7.
[Fig. 9]

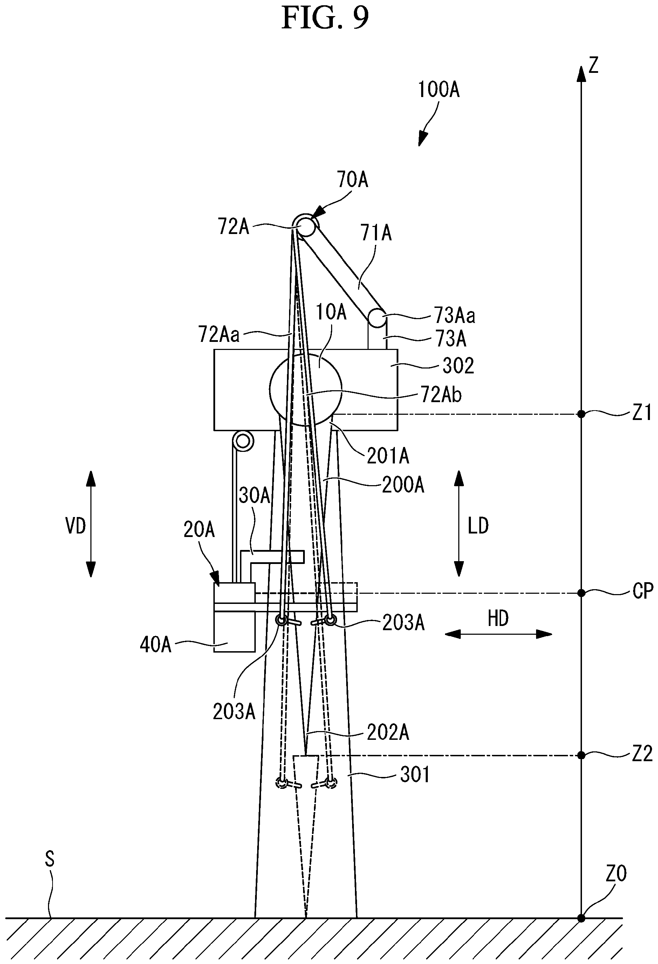

   Fig. 9 is a front view illustrating a second modified example for the composite material cutting apparatus illustrated in Fig. 7.
[Fig. 10]

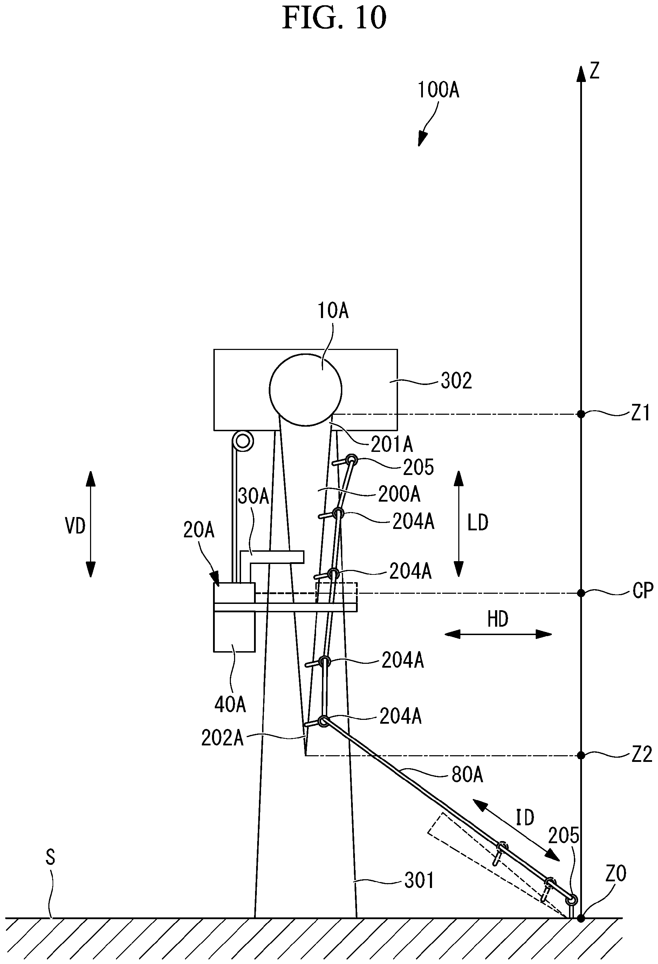

   Fig. 10 is a front view illustrating a third modified example for the composite material cutting apparatus illustrated in Fig. 7.
[Fig. 11]

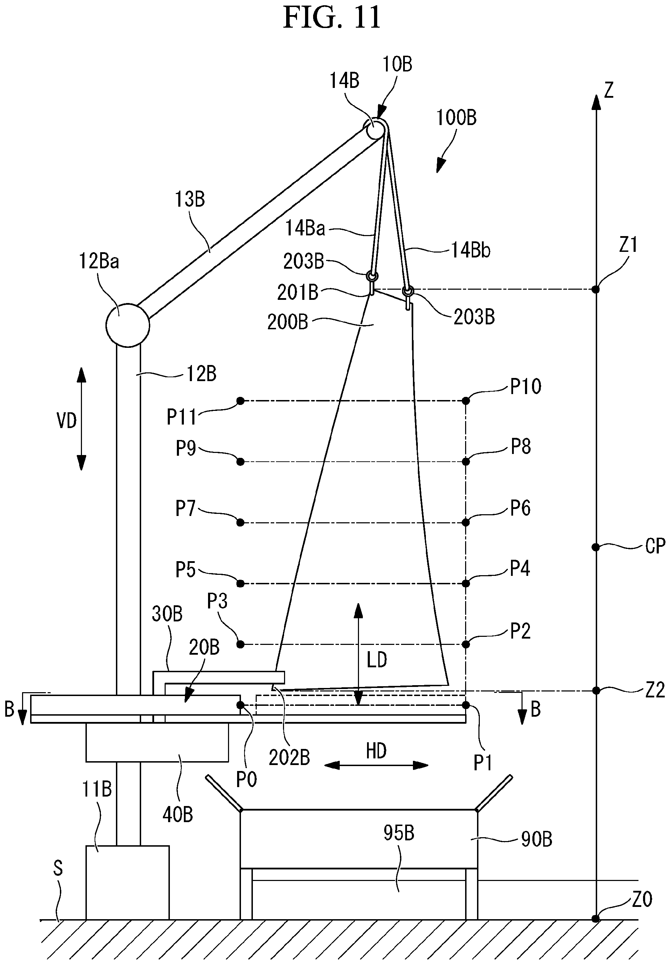

   Fig. 11 illustrates a composite material cutting apparatus according to a third embodiment of the present disclosure.
[Fig. 12]

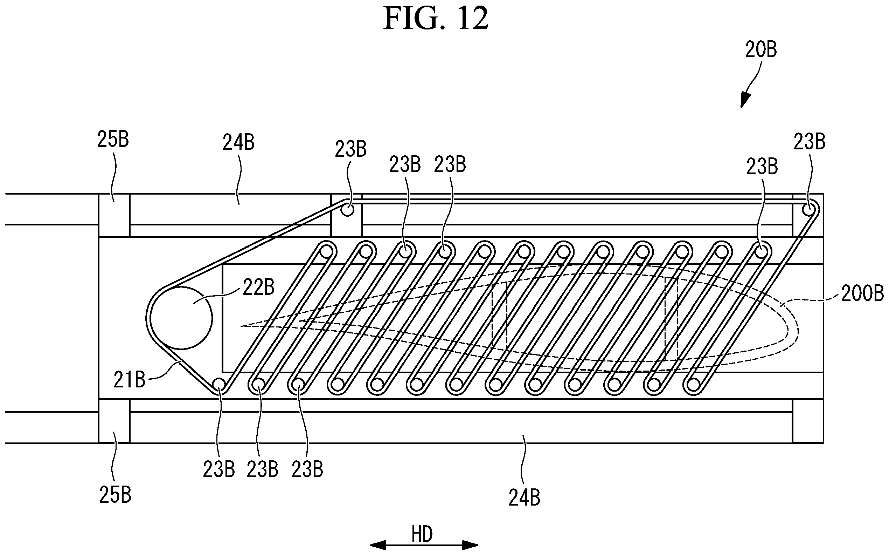

   Fig. 12 is a sectional view viewed along an arrow B-B of the composite material cutting apparatus illustrated in Fig. 11.

### [Description of Embodiments]

### [First Embodiment]

A composite material cutting apparatus 100 according to the first embodiment of the present disclosure will be described below with reference to the drawings. Fig. 1 is a front view illustrating a composite material cutting apparatus 100 according to the first embodiment of the present disclosure. The composite material cutting apparatus 100 of the present embodiment is an apparatus that cuts a long composite material 200. The long composite material 200 is, for example, the main wing of an aircraft and is separated from the fuselage of the aircraft.

The composite material 200 is made of a resin material including a fiber base material. The fiber base material is a member in which sheets formed of a reinforced fiber material such as carbon fiber, glass fiber, or the like are laminated over a plurality of layers, for example. Further, the fiber base material may be a prepreg into which a resin material is impregnated or partially impregnated in advance or may be a combination of a prepreg and a reinforced fiber material.

The resin material is, for example, an epoxy resin; a thermosetting resin material such as unsaturated polyester, vinyl ester, phenol, cyanate ester, polyimide, or the like; or a thermoplastic resin such as polyether ether ketone (PEEK), polyethylene terephthalate (PET), polybutylene terephthalate (PBT), nylon 6 (PA6), nylon 66 (PA66), polyphenylene sulfide (PPS), polyetherimide (PEI), polyether ketone ketone (PEKK), or the like.

As illustrated in Fig. 1, the composite material cutting apparatus 100 of the present embodiment has a support part 10 that supports the composite material 200, a cutting part 20 that cuts the composite material 200, a fixing part 30 that fixes the composite material 200, a gondola 40 that transports the cutting part 20 and the fixing part 30, and an impact absorbing part 50.

The support part 10 is a device that supports a tip (first end part) 201 of the composite material 200 at an upper part in the vertical direction VD and causes a base end (second end part) 202 of the composite material 200 in the longitudinal direction LD to remain floating over an installation surface S at a lower part in the vertical direction VD. The installation surface S is a surface on which the composite material cutting device 100 is installed. In Fig. 1, the axis Z is an axis extending in the vertical direction VD. On the axis Z, a position Z2 of the base end 202 is a position above a position Z0 of the installation surface S. On the axis Z, a position Z1 of the tip 201 is a position above the position Z2.

The support part 10 has a base part 11 installed on the installation surface S, a post 12 fixed to the base part 11 and extending in the vertical direction VD, an arm 13 configured to rotate about a pivot point 12a with respect to the post 12, and a wire winding mechanism 14 fixed to the tip of the arm 13. The wire winding mechanism 14 is a mechanism capable of winding up and unwinding a pair of wires 14a, 14b. One ends of the pair of wires 14a, 14b are fixed to a pair of eye bolts 203 attached to the tip 201 of the composite material 200, respectively.

The wire winding mechanism 14 can be moved from below to above along the vertical direction VD while supporting the composite material 200 by winding up the pair of wires 14a, 14b. Similarly, the wire winding mechanism 14 can support and move the composite material 200 from above to below along the vertical direction VD by winding off the pair of wires 14a, 14b.

The cutting part 20 is a device that cuts the composite material 200 at a cutting position CP between the tip 201 and the base end 202 of the composite material 200 supported by the support part 10. The cutting part 20 is installed on the gondola 40. The cutting position CP at which the cutting part 20 cuts the composite material 200 is a position between the position Z1 of the tip 201 and the position Z2 of the base end 202 on the axis Z.

As illustrated in Fig. 1, the cutting part 20 pushes a cutting wire (cutting member) 21 (see Fig. 2) against the composite material 200 at the cutting position CP along the horizontal direction HD orthogonal to the vertical direction VD and thereby cuts the composite material 200. As illustrated in Fig. 2, the cutting part 20 has the cutting wire 21, a primary pulley 22, a plurality of secondary pulleys 23, a pair of rails 24, and a pair of drive mechanisms 25.

The cutting wire 21 is wound around the primary pulley 22 and the plurality of secondary pulleys 23. The primary pulley 22 is rotated by a motor (not illustrated), and thereby the cutting wire 21 wound around the primary pulley 22 and the plurality of secondary pulleys 23 is rotated. The pair of rails 24 extend parallel to each other in the horizontal direction HD and support a cutting mechanism in which the cutting wire 21, the primary pulley 22, and the plurality of secondary pulleys 23 are integrated.

The pair of drive mechanisms 25 are devices that generate drive force to move the cutting mechanism along the horizontal direction HD. The cutting mechanism to which drive force is applied by the pair of drive mechanisms 25 moves in a direction approaching the composite material 200 in the horizontal direction HD and thereby pushes the cutting wire 21 against the composite material 200. When the cutting mechanism has completely cut the composite material 200 at the cutting position CP, the cutting mechanism reaches a position indicated by the dotted line in Fig. 2. After completely cutting the composite material 200 at the cutting position CP, the pair of drive mechanisms 25 retract the cutting mechanism to a position indicated by the solid line in Fig. 2.

The fixing part 30 is a device that fixes the composite material 200 so as not to move when the composite material 200 is cut by the cutting part 20. The fixing part 30 is installed on the gondola 40. For example, the fixing part 30 causes an adsorption member to contact with the surface of the composite material 200, applies suction force to the adsorption member, and thereby fixes the composite material 200 at a constant position.

The gondola 40 is a device attached movably along the vertical direction VD with respect to the post 12. An operator who operates the cutting part 20 and the fixing part 30 is able to ride in the gondola 40. Further, when operated by the operator, the gondola 40 can move the cutting part 20 and the fixing part 30 to any position along the vertical direction VD. Therefore, the cutting part 20 can set any position in the longitudinal direction LD of the composite material 200 as the cutting position CP.

The impact absorbing part 50 is a member arranged below the composite material 200 supported by the support part 10 and configured to absorb an impact due to falling of the lower portion of the composite material 200 than the cutting position CP in the vertical direction VD cut off by the cutting part 20.

A composite material cutting method for cutting the composite material 200 by using the composite material cutting apparatus 100 of the present embodiment will now be described with reference to the drawings. Fig. 3 is a flowchart illustrating the composite material cutting method of the present embodiment.

In step S101 (supporting step), a pair of eye bolts 203 are fixed to the tip 201 of the composite material 200 removed from the fuselage of the aircraft, and a pair of wires 14a, 14b are fixed to the pair of eye bolts 203. Thereafter, the wire winding mechanism 14 then winds up the pair of wires 14a and 14b to move the composite material 200 from below to above along the vertical direction VD to the state shown in Fig. 1.

In step S102 (fixing step), the fixing part 30 fixes the composite material 200 so as not to move when the composite material 200 is cut by the cutting part 20. For example, the fixing part 30 causes an adsorption member to contact with the surface of the composite material 200, applies suction force to the adsorption member, and thereby fixes the composite material 200 at a constant position.

In step S103 (cutting step), the cutting part 20 cuts the composite material 200 at the cutting position CP between the tip 201 and the base end 202 of the composite material 200 supported by the support part 10. The composite material cutting apparatus 100 can set the cutting position CP at any position on the axis Z.

For example, when dividing the composite material 200 into two along the longitudinal direction LD, the composite material cutting apparatus 100 sets only one position near the intermediate position between the tip 201 and the base end 202 as the cutting position CP and cuts the composite material 200 at the one cutting position CP. Further, for example, when dividing the composite material 200 into three along the longitudinal direction LD, the composite material cutting apparatus 100 sets two positions dividing the extent between the tip 201 and the base end 202 into three as the cutting positions CP. In such a case, the cutting part 20 first cuts the composite material 200 at the cutting position CP near the base end 202 and then cuts the composite material 200 at the cutting position CP near the tip 201.

In such a way, the composite material cutting apparatus 100 sets one or a plurality of positions in the vertical direction VD as the cutting positions CP in order to divide the composite material 200 and cuts the composite material 200 at a plurality of cutting positions from the base end 202 to the tip 201. Accordingly, the composite material 200 can be cut in any size.

The portion lower than the cutting position CP of the vertical direction VD cut off by the cutting part 20 of the composite material 200 falls downward toward the installation surface S along the vertical direction VD due to gravity. When the falling portion of the composite material 200 comes into contact with the impact absorbing part 50, the impact due to the falling is absorbed. Thus, compared to a case where the impact absorbing part 50 is not arranged, noise occurring when the falling portion of the composite material 200 impacts the installation surface S is reduced, and scattering of fragments of the composite material 200 when coming into contact with the installation surface S is prevented.

A first modified example for the composite material cutting apparatus 100 of the present embodiment will now be described. Fig. 4 is a front view illustrating the first modified example for the composite material cutting apparatus 100 illustrated in Fig. 1. The composite material cutting apparatus 100 of the present modified example does not have the impact absorbing part 50. However, the composite material cutting apparatus 100 of the present modified example has a holding part 60 that holds the lower portion of the composite material 200 than the cutting position CP in the vertical direction VD.

The holding part 60 of the composite material cutting apparatus 100 of the first modified example is a apparatus that holds the lower portion of the composite material 200 than the cutting position CP in the vertical direction VD cut off by the cutting part 20 so as to maintain the base end 202 of the composite material 200 floating at a lower part in the vertical direction VD. As illustrated in Fig. 4, the holding part 60 has a bag 61, an arm 62 configured to rotate about a pivot point 12b with respect to the post 12, and a wire winding mechanism 63 fixed to the tip of the arm 62.

The bag 61 is a bag-like member that accommodates and holds therein the lower portion of the composite material 200 than the cutting position CP in the vertical direction VD. The wire winding mechanism 63 is a mechanism capable of winding up and unwinding a pair of wires 63a, 63b. One ends of the pair of wires 63a, 63b are fixed to the upper part end of the bag 61, respectively.

The wire winding mechanism 63 can support and move the lower portion of the composite material 200 than the cutting position CP, which was cut at the cutting position CP, from above to below in the vertical direction VD by winding off the pair of wires 63a, 63b. Accordingly, the lower portion of the composite material 200 than the cutting position CP, which was cut at the cutting position CP, can be safely lowered onto the installation surface S without falling due to the gravity. The composite material 200 indicted by the dotted line in Fig. 4 illustrates the lower portion of the composite material 200 than the cutting position CP lowered onto the installation surface S.

Next, a second modified example for the composite material cutting apparatus 100 of the present embodiment will be described. Fig. 5 is a front view illustrating the second modified example for the composite material cutting apparatus 100 illustrated in Fig. 1. The composite material cutting apparatus 100 of the present modified example does not have the impact absorbing part 50. However, the composite material cutting apparatus 100 of the present modified example has a holding part 70 that holds the lower portion of the composite material 200 than the cutting position CP in the vertical direction VD.

The holding part 70 of the composite material cutting apparatus 100 of the second modified example is an apparatus that holds the lower portion of the composite material 200 than the cutting position CP in the vertical direction VD cut off by the cutting part 20 so as to maintain the base end 202 of the composite material 200 floating at a lower part in the vertical direction VD. As illustrated in Fig. 5, the holding part 70 has an arm 71 configured to rotate about the pivot point 12b with respect to the post 12 and a wire winding mechanism 72 fixed to the tip of the arm 71.

The wire winding mechanism 72 is a mechanism capable of winding up and unwinding a pair of wires (hanging members) 72a, 72b. One end of the pair of wires 72a, 72b is respectively attached to an eye bolt 203 fixed below the cutting position CP of the composite material 200 than the cutting position CP. The holding part 70 holds a portion of the composite material 200 cut by the cutting part 20 lower than the cutting position CP in the vertical direction VD by fixing it to a pair of wires 72a, 72b suspended from above in the vertical direction VD and holds the lower portion.

The wire winding mechanism 72 can be moved from above to below along the vertical direction VD while supporting the lower portion of the cutting position CP of the composite material 200 cut at the cutting position CP by winding out the pair of wires 72a, 72b. Thus, the portion of the composite material 200 cut at the cutting position CP below the cutting position CP can be safely lowered to the installation surface S without falling by gravity. The composite material 200 shown as a dotted line in FIG. 5 shows a portion where the cutting position CP of the composite material 200 is lower than the portion where it is lowered on the installation surface S.

Next, a third modified example for the composite material cutting apparatus 100 of the present embodiment will be described. Fig. 6 is a front view illustrating the third modified example for the composite material cutting apparatus 100 illustrated in Fig. 1. The composite material cutting apparatus 100 of the present modified example does not have the impact absorbing part 50. However, the composite material cutting apparatus 100 of the present modified example has a wire (linear member) 80 and a plurality of eye bolts (insertion members) 204.

The wire 80 extends from a vertical direction VD to an inclined direction ID and is a metallic liner member having one end fixed to an installation surface S on which the support part 10 is installed. The other end of the wire 80 is fixed to the tip of the arm 13.

The plurality of eye bolts 204 are members fixed to both below and above the cutting position CP of the composite material 200 in the vertical direction VD, and an insertion hole for inserting the wire 80 is formed. As shown in Fig. 6, the wire 80 is inserted into eye bolt 204 secured to the composite material 200.

The lower portion of the composite material 200 than the cutting position CP in the vertical direction VD cut off by the cutting part 20 is guided in the inclination direction ID toward the installation surface S along the wire 80. The composite material 200 illustrated by the dotted line in Fig. 6 illustrates the lower portion of the composite material 200 than the cutting position CP lowered onto the installation surface S.

The effects and advantages achieved by the composite material cutting apparatus 100 of the present embodiment described above will be described.

According to the composite material cutting apparatus 100 of the present embodiment, for example, when the long composite material 200 such as a main wing is removed from the fuselage of an aircraft for dismantling the composite material 200, the support part 10 can support the tip 201 of the long composite material 200 at the upper part in the vertical direction VD and cause the base end 202 to remain floating at a lower part in the vertical direction VD. The cutting part 20 then cuts the composite material at the cutting position CP between the tip 201 and the base end 202 of the composite material supported by the support part 10. Accordingly, it is possible to cut the composite material 200 without transporting the long composite material 200 to a dismantling site and reduce the cost in dismantling the long composite material 200.

Further, according to the composite material cutting apparatus 100 of the present embodiment, the lower portion of the composite material 200 than the cutting position CP in the vertical direction VD cut off by the cutting part 20 is held by the holding part 60, 70, and the base end 202 can be maintained floating at a lower part in the vertical direction VD. It is thus possible to prevent danger due to falling of the lower portion of the composite material 200 than the cutting position CP cut off by the cutting part 20.

Further, according to the composite material cutting apparatus 100 of the present embodiment, since the lower portion of the composite material 200 lower than the vertical cutting position CP in the vertical direction VD cut off by the cutting part 20 is housed in the bag 61, the danger due to the fall of the lower portion of the composite material 200 lower than the cutting position CP cut off by the cutting part 20 can be prevented.

Further, according to the composite material cutting apparatus 100 of the present embodiment, the impact due to falling of the lower portion of the composite material 200 than the cutting position CP in the vertical direction VD cut off by the cutting part 20 is absorbed by the impact absorbing part 50. It is thus possible to suppress danger due to falling of the lower portion of the composite material 200 than the cutting position CP cut off by the cutting part 20.

Further, according to the composite material cutting apparatus 100 of the present embodiment, the lower portion of the composite material than the cutting position CP in the vertical direction VD cut off by the cutting part 20 is guided in the inclination direction ID along the inclination direction ID in which the wire 80 inserted in the insertion hole of the eye bolts 204 extends, and the lower portion then reaches the installation surface S. Although the composite material 200 collides with the installation surface S when the cut composite material 200 reaches the installation surface S, the composite material 200 is caught by the wire 80 via the eye bolts 204. It is thus possible to prevent danger of scattering of the cut composite material 200 due to impact received from the installation surface S after the cut composite material 200 reached the installation surface S.

### [Second Embodiment]

Next, a composite material cutting apparatus 100A according to the second embodiment of the present disclosure will be described with reference to the drawings. The present embodiment is a modified example to the first embodiment and, unless specifically described below, is the same as the first embodiment, and the description thereof will be omitted below.

Fig. 7 is a front view showing a composite material cutting apparatus 100A according to the second embodiment of the present disclosure. The composite material cutting apparatus 100A of this embodiment is an apparatus for cutting the long composite material 200A. The long composite material 200A is a blade used for renewable energy power generation and is, for example, a blade for a wind turbine or tidal power generation or the like. In this embodiment, the long composite material 200A is attached to a nacelle fixed to the post 301 installed on the installation surface S.

The composite material 200A is made of a resin material including a fiber base material. The fiber base material or the resin material are the same as those in the first embodiment, and the description thereof will be omitted below.

As illustrated in Fig. 7, the composite material cutting apparatus 100A of the present embodiment has a hub (support part) 10A that supports the composite material 200A, a cutting part 20A that cuts the composite material 200A, a fixing part 30A that fixes the composite material 200A, a gondola 40A that transports the cutting part 20A and the fixing part 30A, and the impact absorbing part 50A.

The hub 10A is attached rotatably to a nacelle 302 and is a device that supports a base end (first end part) 201A of the composite material 200A at the upper part in the vertical direction VD and causes a tip (second end part) 202A of the composite material 200A in the longitudinal direction LD to remain floating over the installation surface S at a lower part in the vertical direction VD. The installation surface S is a surface on which the composite material cutting apparatus 100A is installed. In Fig. 7, the axis Z is an axis extending in the vertical direction VD. On the axis Z, the position Z2 of the tip 202A is a position above the position Z0 of the installation surface S. On the axis Z, the position Z1 of the base end 201A is a position above the position Z2.

The cutting part 20A is a device that cuts the composite material 200A at the cutting position CP between the base end 201A and the tip 202A of the composite material 200A supported by the hub 10A. The cutting part 20A is installed on the gondola 40A. The cutting position CP at which the cutting part 20A cuts the composite material 200A is a position between the position Z1 of the base end 201A and the position Z2 of the tip 202A in the axis Z.

As illustrated in Fig. 7, the cutting part 20A pushes a cutting wire (not illustrated) against the composite material 200A at the cutting position CP along the horizontal direction HD orthogonal to the vertical direction VD and thereby cuts the composite material 200A. The configuration of the cutting part 20A is the same as that illustrated in Fig. 2 of the first embodiment.

The fixing part 30A is a device that fixes the composite material 200A so as not to move when the composite material 200A is cut by the cutting part 20A. The fixing part 30A is installed on the gondola 40A. For example, the fixing part 30A causes an adsorption member to contact with the surface of the composite material 200A, applies suction force to the adsorption member, and thereby fixes the composite material 200A at a constant position.

The gondola 40A is a device attached movably along the vertical direction VD with respect to the nacelle 302. The operator who operates the cutting part 20A and the fixing part 30A is able to ride in the gondola 40A. Further, when operated by the operator, the gondola 40A can move the cutting part 20A and the fixing part 30A to any position along the vertical direction VD. Therefore, the cutting part 20A can set any position in the longitudinal direction LD of the composite material 200A as the cutting position CP.

The impact absorbing part 50A is a member arranged below the composite material 200A supported by the hub 10A and configured to absorb an impact due to falling of the lower portion of the composite material 200A than the cutting position CP in the vertical direction VD cut off by the cutting part 20A.

The lower portion of the composite material 200A than the cutting position CP in the vertical direction VD cut off by the cutting part 20A falls due to the gravity downward in the vertical direction VD toward the installation surface S. When the falling portion of the composite material 200A comes into contact with the impact absorbing part 50A, the impact due to the falling is absorbed. Thus, compared to a case where the impact absorbing part 50A is not arranged, noise occurring when the falling portion of the composite material 200A impacts the installation surface S is reduced, and scattering of fragments of the composite material 200A when coming into contact with the installation surface S is prevented.

A first modified example for the composite material cutting apparatus 100A of the present embodiment will now be described. Fig. 8 is a front view illustrating the first modified example for the composite material cutting apparatus 100A illustrated in Fig. 7. The composite material cutting apparatus 100A of the present modified example does not have the impact absorbing part 50A. However, the composite material cutting apparatus 100A of the present modified example has a holding part 60A that holds the lower portion of the composite material 200A than the cutting position CP in the vertical direction VD.

The holding part 60A of the composite material cutting apparatus 100A of the first modified example is an apparatus that holds the lower part of the composite material 200A than the cutting position CP of the vertical direction VD cut off by the cutting part 20A so that the tip 202A of the composite material 200A remains floating on a lower part of the vertical direction VD. As shown in Fig. 8, the holding part 60A has a bag 61A, an arm 62A configured to rotate about a pivot point 64Aa with respect to the post 64A, and a wire winding mechanism 63A fixed to the tip of the arm 62A.

The bag 61A is a bag-like member that holds a portion of the composite material 200A below the cutting position CP in the vertical direction VD. The wire winding mechanism 63A is a mechanism capable of winding up and unwinding a pair of wires 63Aa, 63Ab. One end of the pair of wires 63Aa and 63Ab is fixed to the upper end of the bag 61A, respectively.

The wire winding mechanism 63A can support and move a portion of the composite material 200A cut at the cutting position CP, lower than the cutting position CP in the vertical direction VD by winding off the pair of wires 63Aa, 63Ab. Thus, the portion of the composite material 200A cut at the cutting position CP lower than the cutting position CP, can be safely lowered to the installation surface S without falling due to the gravity.

Next, a second modified example for the composite material cutting apparatus 100A of the present embodiment will be described. Fig. 9 is a front view illustrating the second modified example for the composite material cutting apparatus 100A illustrated in Fig. 7. The composite material cutting apparatus 100A of the present modified example does not have the impact absorbing part 50A. However, the composite material cutting apparatus 100A of the present modified example has a holding part 70A that holds the lower portion of the composite material 200A than the cutting position CP in the vertical direction VD.

The holding part 70A of the composite material cutting apparatus 100A of the second modified example is an apparatus that holds the lower portion of the composite material 200A than the cutting position CP in the vertical direction VD cut off by the cutting part 20A so as to maintain the tip 202A of the composite material 200A floating at a lower part in the vertical direction VD. As illustrated in Fig. 9, the holding part 70A has an arm 71A configured to rotate about a pivot point 73Aa with respect to a post 73A and a wire winding mechanism 72A fixed to the tip of the arm 71A.

The wire winding mechanism 72A is a mechanism capable of winding up and unwinding a pair of wires (suspension members) 72Aa and 72Ab. One ends of the pair of wires 72Aa, 72Ab are attached respectively to the eye bolts 203A fixed to the lower portion of the composite material 200A than the cutting position CP. The holding part 70A fixes the lower portion of the composite material 200A than the cutting position CP in the vertical direction VD, which was cut off by the cutting part 20A, to the pair of wires 72Aa, 72Ab suspended from above in the vertical direction VD and holds the lower portion.

The wire winding mechanism 72A can support and move the lower portion of the composite material 200A cut at the cutting position CP lower than the cutting position CP in the vertical direction VD by winding off the pair of wires 72Aa, 72Ab. Accordingly, the lower portion of the composite material 200A than the cutting position CP, which was cut at the cutting position CP, can be safely lowered onto the installation surface S without falling due to the gravity. The composite material 200A indicted by the dotted line in Fig. 9 illustrates the lower portion of the composite material 200A than the cutting position CP lowered onto the installation surface S.

Next, a third modified example for the composite material cutting apparatus 100A of the present embodiment will be described. Fig. 10 is a front view illustrating the third modified example for the composite material cutting apparatus 100A illustrated in Fig. 7. The composite material cutting device 100A of the present modified example does not have the impact absorbing part 50A. However, the composite material cutting apparatus 100A of the present modified example has a wire (linear member) 80A and a plurality of eye bolts (insertion members) 204A.

The wire 80A is a metal linear member extending in an inclination direction ID inclined from the vertical direction VD and having one end fixed to eye bolts 205 attached to the installation surface S on which the support part 10A is installed. The other end of the wire 80A is fixed to the eye bolts 205 attached to the post 301.

The plurality of eye bolts 204A are members fixed to both below and above the cutting position CP of the composite material 200A in the vertical direction VD, and an insertion hole is formed into which the wire 80A is inserted. As shown in FIG. 10, the wire 80A is inserted in the eye bolts 204A fixed to the composite material 200A.

The lower portion lower than the cutting position CP of the vertical direction VD cut by the cutting part 20A of the composite material 200 is guided along the wire 80A toward the installation surface S in the inclined direction ID. The composite material 200A shown as a dotted line in Fig. 10 represents a portion below the cutting position CP of the composite material 200A lowered to the installation surface S.

The effects and advantages achieved by the composite material cutting apparatus 100A of the present embodiment described above will be described.

According to the composite material cutting apparatus 100A of the present embodiment, for example, when the long composite material 200A such as a blade of a windmill or for tidal power generation or the like is dismantled, the hub 10A can support the base end 201A of the long composite material 200 at the upper part in the vertical direction VD and cause the tip 202A to remain floating at a lower part in the vertical direction VD. The cutting part 20A then cuts the composite material 200A at the cutting position CP between the base end 201A and the tip 202A of the composite material supported by the hub 10A. Accordingly, it is possible to cut the composite material 200A without transporting the long composite material 200A to a dismantling site and reduce the cost in dismantling the long composite material 200A.

Further, according to the composite material cutting apparatus 100A of the present embodiment, the lower portion of the composite material 200A than the cutting position CP in the vertical direction VD cut off by the cutting part 20A is held by the holding part 60A, 70A, and the tip 202A can be maintained floating at a lower part in the vertical direction VD. It is thus possible to prevent danger due to falling of the lower portion of the composite material 200A than the cutting position CP cut off by the cutting part 20A.

Further, according to the composite material cutting apparatus 100A of the present embodiment, since the portion below the vertical direction VD in the vertical direction of the cutting position CP of the composite material 200A cut by the cutting part 20A is housed in the bag 61A, danger due to falling of the portion lower than portion the cutting position CP cut by the cutting part 20A of the composite material 200A can be prevented.

Further, according to the composite material cutting apparatus 100A of the present embodiment, the impact due to falling of the lower portion of the composite material 200A than the cutting position CP in the vertical direction VD cut off by the cutting part 20A is absorbed by the impact absorbing part 50A. It is thus possible to suppress danger due to falling of the lower portion of the composite material 200A than the cutting position CP cut off by the cutting part 20A.

Further, according to the composite material cutting apparatus 100A of the present embodiment, the lower portion of the composite material 200A than the cutting position CP in the vertical direction VD cut off by the cutting part 20A is guided in the inclination direction ID along the inclination direction ID in which the wire 80A inserted in the insertion hole of the eye bolts 204A extends, and the lower portion then reaches the installation surface S. Although the composite material 200A collides with the installation surface S when the cut composite material 200A reaches the installation surface S, the composite material 200A is caught by the wire 80A via the eye bolts 204A. It is thus possible to prevent danger of scattering of the cut composite material 200A due to impact received from the installation surface S after the cut composite material 200A reached the installation surface S.

### [Third Embodiment]

Next, a composite material cutting apparatus 100B according to the third embodiment of the present disclosure will be described with reference to the drawings. The present embodiment is a modified example to the first embodiment and, unless specifically described below, is the same as the first embodiment, and the description thereof will be omitted below.

Fig. 11 is a front view illustrating the composite material cutting apparatus 100B according to the third embodiment of the present disclosure. The composite material cutting apparatus 100B of the present embodiment is an apparatus that cuts a long composite material 200B. The long composite material 200B is, for example, the main wing of an aircraft and is removed from the fuselage of the aircraft.

As illustrated in Fig. 11, the composite material cutting apparatus 100B of the present embodiment has a support part 10B that supports the composite material 200B, a cutting part 20B that cuts the composite material 200B, a fixing part 30B that fixes the composite material 200B, a gondola 40B that transports the cutting part 20B and the fixing part 30B, a crushing device 90B, and a belt conveyer 95B.

The support part 10B is a device that supports a tip (first end part) 201B of the composite material 200B at the upper part in the vertical direction VD and causes a base end (second end part) 202B of the composite material 200B in the longitudinal direction LD to remain floating over the installation surface S at a lower part in the vertical direction VD. The installation surface S is a surface on which the composite material cutting apparatus 100B is installed. In Fig. 11, the axis Z is an axis extending in the vertical direction VD. On the axis Z, the position Z2 of the base end 202B is a position above the position Z0 of the installation surface S. On the axis Z, the position Z1 of the tip 201B is a position above the position Z2.

The support part 10B has a base part 11B provided on the installation surface S, a post 12B fixed to the base part 11B and extending in the vertical direction VD, an arm 13B configured to rotate about the base point 12Ba with respect to the post 12B, and a wire winding mechanism 14B fixed to the tip of the arm 13B. The wire winding mechanism 14B is a mechanism capable of winding up and unwinding a pair of wires 14Baand 14Bb is respectively fixed to a pair of eye bolts 203B attached to the tip end 201B of the composite material 200B, respectively.

The wire winding mechanism 14B can support and move the composite material 200B from below to above in the vertical direction VD by winding up the pair of wires 14Ba, 14Bb. Similarly, the wire winding mechanism 14B can support and move the composite material 200B from above to below in the vertical direction VD by winding off the pair of wires 14Ba, 14Bb.

The cutting part 20B is a device that cuts the composite material 200B at a cutting position CP between the tip 201B and the base end 202B of the composite material 200B supported by the support part 10B. The cutting part 20B is installed on the gondola 40B. The cutting position CP at which the cutting part 20B cuts the composite material 200B is a position between the position Z1 of the tip 201B and the position Z2 of the base end 202B on the axis Z.

As illustrated in Fig. 11, the cutting part 20B pushes a cutting wire (cutting member) 21B (see Fig. 12) against the composite material 200B at the cutting position CP along the horizontal direction HD orthogonal to the vertical direction VD and thereby cuts the composite material 200B. As illustrated in Fig. 12, the cutting part 20B has the cutting wire 21B, a primary pulley 22B, a plurality of secondary pulleys 23B, a pair of rails 24B, and a pair of drive mechanisms 25B.

The cutting wire 21B is wound around the primary pulley 22B and the plurality of secondary pulleys 23B. The primary pulley 22B is rotated by a motor (not illustrated), and thereby the cutting wire 21B wound around the primary pulley 22B and the plurality of secondary pulleys 23B is rotated. The pair of rails 24B extend parallel to each other in the horizontal direction HD and support a cutting mechanism in which the cutting wire 21B, the primary pulley 22B, and the plurality of secondary pulleys 23B are integrated.

The pair of drive mechanisms 25B are devices that generate drive force to move the cutting mechanism along the horizontal direction HD. The cutting mechanism to which drive force is applied by the pair of drive mechanisms 25B moves in a direction approaching the composite material 200B in the horizontal direction HD and thereby pushes the cutting wire 21B against the composite material 200B. When the cutting mechanism has completely cut the composite material 200B at the cutting position CP, the cutting mechanism reaches a position indicated by the dotted line in Fig. 11. After completely cutting the composite material 200B at the cutting position CP, the pair of drive mechanisms 25B retract the cutting mechanism.

The cutting part 20B of the present embodiment is arranged in a shape along which the cutting wire 21B runs in a zigzag manner so that the cutting wire 21B passes through multiple positions in the horizontal direction HD. Thus, when the cutting part 20B moves from below to above along the vertical direction VD in a state illustrated in Fig. 12, the composite material 200B is cut along the vertical direction VD at a plurality of positions in the horizontal direction HD.

Further, when the cutting part 20B is moved along the horizontal direction HD in a state where the composite material 200B is cut along the vertical direction VD at a plurality of positions in the horizontal direction HD, portions cut along the vertical direction VD at a plurality of positions in the horizontal direction HD become a plurality of small pieces and fall to the crushing device 90B. The cutting part 20B cuts the composite material 200B so that the size of each small piece becomes a size that is smaller than or equal to the maximum size that can be crushed by the crushing device 90B.

The cutting part 20B moves the cutting wire 21B along both the horizontal direction HD and the vertical direction VD and divides the composite material 200B into pieces of the maximum size or smaller that can be crushed by the crushing device 90B. Specifically, the cutting part 20B moves the position of the tip of the cutting part 20B in the following order, as illustrated in Fig. 11.

The position of the tip of the cutting part 20B is moved along the horizontal direction HD from position P0 to position P1 and then moved from position P1 to position P2 along the vertical direction VD. The position of the tip of the cutting part 20B is moved from position P2 to position P3 along the horizontal direction HD. During the motion from position P2 to position P3, small pieces of the composite material 200B fall to the crushing device 90B.

The motion from position P3 to position P5 is the same as the motion from position P0 to position P3, and the order is position P3, position P2, position P4, and position P5. Then, the position of the tip of the cutting part 20B is moved along the horizontal direction HD and the vertical direction VD in the order of position P5, position P4, position P6, position P7, position P6, position P8, position P9, position P8, position P10, and position P11.

The fixing part 30B is a device that fixes the composite material 200B so as not to move when the composite material 200B is cut by the cutting part 20B. The fixing part 30B is installed on the gondola 40B. For example, the fixing part 30B causes an adsorption member to contact with the surface of the composite material 200B, applies suction force to the adsorption member, and thereby fixes the composite material 200B at a constant position.

The gondola 40B is a device attached movably along the vertical direction VD with respect to the post 12B. The operator who operates the cutting part 20B and the fixing part 30B is able to ride in the gondola 40B. Further, when operated by the operator, the gondola 40B can move the cutting part 20B and the fixing part 30B to any position along the vertical direction VD. Therefore, the cutting part 20B can set any position in the longitudinal direction LD of the composite material 200B as the cutting position CP.

The crushing device 90B is a device that crushes the composite material 200B cut off by the cutting part 20B. The composite material 200B crushed by the crushing device 90B is supplied to the belt conveyer 95B and conveyed to a disposal site (not illustrated) by the belt conveyer 95B.

According to the composite material cutting apparatus 100B of the present embodiment, the cutting wire 21B is moved along both the horizontal direction HD and the vertical direction VD to divide the composite material 200B into pieces of a predetermined size or smaller (for example, smaller than or equal to the maximum size that can be crushed by the crushing device 90B), and thereby the transportation cost of the cut composite material 200B can be reduced.

### [Other Embodiments]

Although the device using the cutting wire 21, 21A, 21B as the cutting part 20, 20A, 20B is employed in the above description, other forms may be employed. For example, to suppress chips from occurring in cutting, a wet wire saw may be employed. Further, a laser cutting machine or a water jet cutting machine may be employed.

Although the cutting parts 20, 20A, 20B are operated by an operator in the above description, other forms may be employed. For example, the cutting part 20, 20A, 20B may be controlled by a control signal transmitted from a control device (not illustrated). In such a case, it is preferable to attach a camera that captures an image of the cutting position CP to the gondola 40, 40A, 40B and control the cutting parts 20, 20A, 20B by the control device based on the image acquired by the camera.

The composite material cutting apparatus according to the embodiment described above is understood as follows, for example.

The composite material cutting apparatus (100) according to the present disclosure includes: a support part (10) for supporting a first end part (201) in a longitudinal direction (LD) of a long composite material (200) made of a resin material including a fiber base material at the upper part in the vertical direction (VD) and cause a second end part (202) in the longitudinal direction of the composite material to remain floating at a lower part in the vertical direction; and a cutting part (20) configured to cut the composite material at a cutting position (CP) between the first end part and the second end part of the composite material supported by the support part.

According to the composite material cutting apparatus of the present disclosure, for example, when a long composite material is removed from another member for dismantling, the support part can support the first end part of a long composite material made of a resin material including a fiber base material at the upper part in the vertical direction and cause the second end part thereof to remain floating at a lower part in the vertical direction. The cutting part then cuts the composite material at a cutting position between the first end part and the second end part of the composite material supported by the support part. Accordingly, it is possible to cut the composite material without transporting the long composite material to a dismantling site and reduce the cost in dismantling the long composite material.

The composite material cutting apparatus according to the present disclosure may be configured to include a holding part (60, 70) configured to hold the lower portion of the composite material than the cutting position in the vertical direction cut off by the cutting part so as to maintain the second end part floating at a lower part in the vertical direction.

According to the composite material cutting apparatus of the present configuration, the lower portion of the composite material than the cutting position in the vertical direction cut off by the cutting part is held by the holding part, and the second end part can be maintained floating at a lower part in the vertical direction. It is thus possible to prevent danger due to falling of the lower portion of the composite material than the cutting position cut off by the cutting part.

The composite material cutting apparatus of the above configuration may be formed such that the holding part accommodates, in a bag (61), and holds the lower portion of the composite material than the cutting position in the vertical direction cut off by the cutting part, and the bag is suspended from above in the vertical direction.

According to the composite material cutting apparatus of the present form, since the lower portion of the composite material than the cutting position in the vertical direction cut off by the cutting part is accommodated in the bag, it is possible to prevent danger due to falling of the lower portion of the composite material than the cutting position cut off by the cutting part.

The composite material cutting apparatus of the above configuration may have a form such that the holding part fixes, to a suspending member, and holds the lower portion of the composite material than the cutting position in the vertical direction cut off by the cutting part, and the suspending member is suspended from above in the vertical direction.

According to the composite material cutting apparatus of the present form, since the lower portion of the composite material than the cutting position in the vertical direction cut off by the cutting part is fixed to the suspending member, it is possible to prevent danger due to falling of the lower portion of the composite material than the cutting position cut off by the cutting part.

The composite material cutting apparatus according to the present disclosure may be configured to include an impact absorbing part (50) arranged below the composite material (200) supported by the support part and configured to absorb an impact due to falling of the lower portion of the composite material than the cutting position in the vertical direction cut off by the cutting part.

According to the composite material cutting apparatus having this configuration, the impact caused by the falling of the composite material on the lower side in the vertical direction than the cutting position cut by the cutting part is absorbed by the impact absorbing part. Thus, the danger due to the falling of the lower part of the composite material can be suppressed rather than the cutting position cut by the cutting part.

The composite material cutting apparatus according to the present disclosure may be configured to include: a linear member extending in an inclination direction inclined from the vertical direction and having one end fixed to an installation surface on which the support part is installed; and an insertion member fixed below, in the vertical direction, the cutting position of the composite material and having an insertion hole formed in the insertion member, the linear member being inserted in the insertion hole, and may be configured such that the lower portion of the composite material than the cutting position in the vertical direction cut off by the cutting part is guided in the inclination direction toward the installation surface along the linear member.

According to the composite material cutting apparatus of the present configuration, the lower portion of the composite material than the cutting position in the vertical direction cut off by the cutting part is guided in the inclination direction along the inclination direction in which the linear member inserted in the insertion hole of the insertion members extends, and the lower portion then reaches the installation surface. Although the composite material collides with the installation surface when the cut composite material reaches the installation surface, the composite material is caught by the linear member via the insertion members. It is thus possible to prevent danger of scattering of the cut composite material due to impact received from the installation surface after the cut composite material reached the installation surface.

The composite material cutting apparatus according to the present disclosure may be configured such that the cutting part cuts the composite material by pushing a cutting member (21) against the composite material at the cutting position along the horizontal direction (HD).

According to the composite material cutting apparatus of the present configuration, it is possible to push a cutting member against the composite material at the cutting position along the horizontal direction and thereby cut the composite material.

The composite material cutting apparatus of the above configuration may be formed such that the cutting part moves the cutting member along both the horizontal direction and the vertical direction to divide the composite material into pieces of a predetermined size or smaller.

According to the composite material cutting apparatus of the present form, the cutting member is moved along both the horizontal direction and the vertical direction to divide the composite material into pieces of a predetermined size or smaller (for example, smaller than or equal to the maximum size that can be crushed by the crushing device), and thereby the transportation cost of the cut composite material can be reduced.

The composite material cutting method according to the present embodiment described above is understood as follows, for example.

The composite material cutting method according to the present disclosure includes: a supporting step (S101) of supporting a first end part of a long composite material made of a resin material including a fiber base material at the upper part in the vertical direction and causing a second end part in the longitudinal direction of the composite material to remain floating at a lower part in the vertical direction; and a cutting step (S103) of cutting the composite material at a cutting position between the first end part and the second end part of the composite material supported by the supporting step.

According to the composite material cutting method of the present disclosure, for example, when detaching a long composite material from another member for dismantling, the supporting step can support the first end part of a long composite material made of a resin material including a fiber base material at the upper part in the vertical direction and cause the second end part thereof to remain floating at a lower part in the vertical direction. The cutting step then cuts the composite material at a cutting position between the first end part and the second end part of the composite material supported by the support part. Accordingly, it is possible to cut the composite material without transporting the long composite material to a dismantling site and reduce the cost in dismantling the long composite material.

### [Reference Signs List]

10, 10B support part
10A hub (support part)
11, 11B base part
12, 12B post
13, 13B arm
14, 14B wire winding mechanism
20, 20A, 20B cutting part
21, 21A, 21B cutting wire (cutting member)
30, 30A, 30B fixing part
40, 40A, 40B gondola
50, 50A impact absorbing part
60, 60A holding part
61,61A bag
62, 62A arm
63, 63A wire winding mechanism
64A post
70, 70A holding part
71, 71A arm
72, 72A wire winding mechanism
80, 80A wire (linear member)
90B crushing device
95B belt conveyer
100, 100A, 100B composite material cutting apparatus
200, 200A, 200B composite material
201, 201B tip (first end part)
201A base end (first end part)
202, 202B base end (second end part)
202A tip (second end part)
203, 203A, 203B eyebolt
204, 204A eyebolt
301 post
302 nacelle
CP cutting position
HD horizontal direction
LD longitudinal direction
S installation surface
VD vertical direction
Z axis

## Claims

1. A composite material cutting apparatus comprising:
a support part configured to support a first end part in a longitudinal direction of a long composite material made of a resin material including a fiber base material at an upper part in the vertical direction and cause a second end part in the longitudinal direction of the composite material to remain floating at a lower part in the vertical direction; and
a cutting part configured to cut the composite material at a cutting position between the first end part and the second end part of the composite material supported by the support part.

2. The composite material cutting apparatus according to claim 1 further comprising a holding part configured to hold a lower portion of the composite material than the cutting position in the vertical direction cut off by the cutting part so as to maintain the second end part floating at a lower part in the vertical direction.

3. The composite material cutting apparatus according to claim 2, wherein the holding part accommodates, in a bag, and holds the lower portion of the composite material than the cutting position in the vertical direction cut off by the cutting part, the bag being suspended from above in the vertical direction.

4. The composite material cutting apparatus according to claim 2, wherein the holding part fixes, to a suspending member, and holds the lower portion of the composite material than the cutting position in the vertical direction cut off by the cutting part, the suspending member being suspended from above in the vertical direction.

5. The composite material cutting apparatus according to claim 1 further comprising an impact absorbing part arranged below the composite material supported by the support part and configured to absorb an impact due to falling of the lower portion of the composite material than the cutting position in the vertical direction cut off by the cutting part.

6. The composite material cutting apparatus according to any one of claims 1 to 5 further comprising:
a linear member extending in an inclination direction inclined from the vertical direction and having one end fixed to an installation surface on which the support part is installed; and
an insertion member fixed below, in the vertical direction, the cutting position of the composite material and having an insertion hole formed in the insertion member, the linear member being inserted into the insertion hole,
wherein the lower portion of the composite material than the cutting position in the vertical direction cut off by the cutting part is guided in the inclination direction toward the installation surface along the linear member.

7. The composite material cutting apparatus according to any one of claims 1 to 6, wherein the cutting part cuts the composite material by pushing a cutting member against the composite material at the cutting position along the horizontal direction.

8. The composite material cutting apparatus according to claim 7, wherein the cutting part moves the cutting member along both the horizontal direction and the vertical direction to divide the composite material into pieces of a predetermined size or smaller.

9. A composite material cutting method comprising:
a supporting step of supporting a first end part in a longitudinal direction of a long composite material made of a resin material including a fiber base material at an upper part in the vertical direction and causing a second end part in the longitudinal direction of the composite material to remain floating at a lower part in the vertical direction; and
a cutting step of cutting the composite material at a cutting position between the first end part and the second end part of the composite material supported by the supporting step.
